Europäisches Patentamt

European Patent Office

Office européen des brevets

(11) Publication number: **0 193 288**
A1

## (12) EUROPEAN PATENT APPLICATION

(21) Application number: **86300667.2**

(22) Date of filing: **31.01.86**

(51) Int. Cl.⁴: **F 16 G 5/16**

(30) Priority: **25.02.85 US 705075**

(43) Date of publication of application:
**03.09.86 Bulletin 86/36**

(84) Designated Contracting States:
**DE FR GB IT NL SE**

(71) Applicant: **GENERAL MOTORS CORPORATION**
**General Motors Building 3044 West Grand Boulevard**
**Detroit Michigan 48202(US)**

(72) Inventor: **Brown, Evans Lloyd**
**1586 Deerhurst**
**Rochester Michigan 48063(US)**

(74) Representative: **Breakwell, John Neil Bower et al,**
**GM Patent Section Luton Office (F6) P.O. Box No. 3**
**Kimpton Road**
**Luton Beds. LU2 0SY(GB)**

(54) Metal drive V-belt.

(57) A metal drive V-belt (46) has a pre-folded portion forming a plurality of abutting drive blocks (20). The drive blocks have longitudinally aligned lateral slots (22) in which are disposed circumferentially extending radially abutting nested continuous metal band members (34). The metal band members maintain the drive blocks in a continuous loop. The slots have smooth radiused corners (32) to provide stress relief. The radially innermost (34a, 34b, 34c) of the nested bands have a chamfer (36) formed on the inner edges thereof and a longitudinally extending locking bead (38a, 38b, 38c) which mates with the next radially outer continuous band.

Fig.2

Fig.3

EP 0 193 288 A1

METAL DRIVE V-BELT

This invention relates to a metal drive V-belt as specified in the preamble of claim 1, for example as disclosed in GB-A-1 558 809.

In prior-art metal drive V-belts, there are drive blocks having lateral slots in which continuous metal bands are contained. These prior-art metal bands do not provide for the prevention of lateral shifting of the metal bands, such that the radial innermost corner of the slot must be machined in order to prevent contact with the belts. Contact in this corner is not desirable since relative movement between the belts and the drive blocks can result in some damage. The need for machining this corner increases the complexity of the manufacturing operations of the drive blocks used with the metal belts.

The present invention is primarily concerned with preventing the continuous metal bands of a drive V-belt from having edge contact with the respective drive blocks.

To this end a metal drive V-belt in accordance with the present invention is characterised by the features specified in the characterising portion of claim 1.

In a preferred embodiment of a metal drive V-belt in accordance with the present invention, contact between the radially innermost corner of the lateral slot and the inner bands is prevented by the use of longitudinally extending locking beads which laterally align the bands. The locking beads can be formed in the bands after they are nested as a unit and prior to the installation thereof in the slots of the drive blocks. The lateral inner edge of the radially inner bands can be chamfered at the same time as the locking bead is formed, or in a separate operation. The locking bead can be formed by a simple rolling process, whereas the chamfer can be ground.

The invention thereby makes available an improved metal drive V-belt having a plurality of metal drive blocks maintained in a continuous loop by a plurality of continuous metal bands wherein the metal bands are prevented from relative lateral migration by longitudinal locking beads formed in at least some of the radially innermost radial bands.

The present invention further makes available an improved metal drive V-belt having a plurality of metal drive blocks maintained in a continuous loop by a plurality of nested radially abutting continuous metal bands disposed in laterally formed longitudinally extending slots formed in the drive blocks, with the bands being prevented from relative lateral migration by longitudinal locking beads formed in at least some of the radially innermost metal bands, and the metal bands having a chamfered edge adjacent the radially innermost corner of the slot, and the slot having a relief radius tangential to the sides of the slot at the said corner.

The invention thus offers the possibility of achieving increased manufacturing efficiency and reduced cost.

In the drawing:

Figure 1 is a cross-sectional view, with parts in elevation, taken through the longitudinal axis of a prior-art metal drive V-belt;

Figure 2 is a sectional view, taken through the longitudinal axis of a preferred embodiment of a metal drive V-belt in accordance with the present invention; and

Figure 3 is an isometric view of a metal drive V-belt in accordance with the present invention positioned on a pair of drive pulleys.

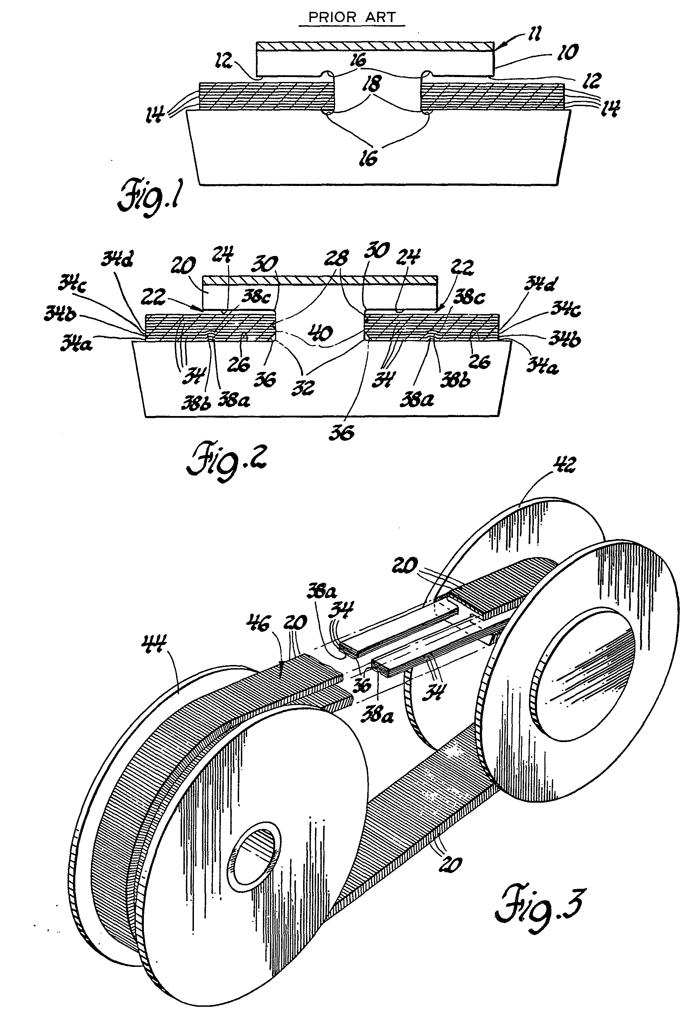

Figure 1 of the drawing shows a prior-art metal drive V-belt which may be constructed as described in EP-A-0165677 or EP-A-0165678.

Both of the above-described prior-art belts have drive blocks 10 which are incorporated in a fan-folded metal member 11 and have formed therein laterally extending longitudinally aligned slots 12 in which are disposed a plurality of continuous metal band members 14. The slots 12 have a stress-relief pattern 16 formed at the radial inner corners thereof. Such a stress-relief pattern 16 eliminates the need for machining a perfectly square inner corner for the slot such that interference between the radially inner edge 18 of the metal bands 14 and the corners of the slots 12 will not occur.

As is well-known with the type of metal V-belt shown, the bands 14 migrate longitudinally relative to the drive blocks 10. It is this longitudinal migration which would cause damage to either the innermost bands 14 or the drive blocks 10 if the above-mentioned interference were to occur.

The metal belt shown in Figure 1 may also be constructed in accordance with the well-known prior-art metal drive V-belts in which each of the drive blocks is a separately machined structure. However, even such use of individual drive blocks does not eliminate the need to prevent interference between the radially innermost corners of the metal bands and the slots.

Figure 2 illustrates a metal V-belt which has a plurality of drive blocks 20 and can be constructed in accordance with the fan-folded structures described in the said EP-A-0165677 and 0165678. Alternatively, the drive blocks 20 could be formed as individual components, as is well-known. The drive blocks 20 incorporate a slot 22 having a laterally extending upper surface 24 and a laterally extending lower surface 26. The laterally extending surfaces 24 and 26 are joined together by a radially extending side 28. The surfaces 24, 26 and the side 28 are joined together at corners 30 and 32. These corners are formed with the conventional stress-relief radii which are tangential to the respective lateral surfaces 24 or 26 and the joining radial side 28.

The drive belt also includes a plurality of nested continuous metal bands 34.

As is seen in Figure 2, the three innermost bands 34a, 34b and 34c each have a chamfered edge 36. The bands 34a to 34c also have formed therein locking beads 38a, 38b and 38c, respectively. These locking beads 38a to 38c extend longitudinally for the entire circumference of the respective metal bands 34a to 34c. These locking beads maintain the bands 34a to 34c in lateral alignment such that the chamfered edge 36 thereof cannot migrate laterally into interfering relationship with the corner 32. The radially outermost locking bead 38c also maintains the next-outer band 34d in lateral alignment by way of a locking bead formed therein. The lateral inner edge 40 of the band 34d is a flat surface which will move smoothly along the flat surfaces 28 of the slots 22.

Figure 3 is an isometric view of a pulley drive system wherein a pair of V-grooved pulleys 42 and 44 are engaged by a metal V-belt 46 incorporating the drive blocks 20 and continuous metal bands 34 described above in relation to Figure 2. As is well known, the V-belt 46 transmits drive (power) from one pulley to the other. The pulleys 42 and 44 can be of either the fixed type or the variable type. With the variable-type pulley, the drive ratio from one pulley to the other can be infinitessimally varied within a predetermined ratio range.

The drive belt 46 described in Figure 2 and incorporating the locking beads 38a to 38c and chamfered edges permits a more economically manufactured article and does not detract from the operating performance of the metal V-belt. The structure of Figure 2 is described as utilizing the fan-folded type of drive blocks; however, as already indicated, individual drive blocks can alternatively be used.

The locking beads 38a to 38c can be formed by means of a simple rolling procedure with the bands in their nested relationship prior to installation in the slots 22.

The locking beads have been described as extending radially outwardly only through the innermost of the bands 34. If desired, it is alternatively possible to have locking beads provided on all the bands 34 from the radially innermost to the radially outermost of the bands, thereby ensuring that lateral alignment is consistent. However, it is more economical, and requires less machining power, if only the radially innermost bands are formed as described above.

Claims:

1. A metal drive V-belt having a plurality of continuous metal bands (34) disposed radially in circumferential abutting relation, and a plurality of drive blocks (20) disposed longitudinally on the metal bands (34) with adjacent drive blocks (20) being in abutment, each drive block (20) having at least one three-sided slot (22) in which the continuous metal bands (34) are disposed, characterised in that one side (26) of the respective slot (22) joins at least one (28) of the other sides of the said slot (22) to form a circular section (32) the centre of which is equally spaced from and non-coincident with the joined sides (26,28), the radially innermost (34a,34b,34c) of the continuous metal bands (34) has a chamfered surface (36) adjacent the joint of the said joined sides (26,28), and a plurality of the radially innermost (34a,34b, 34c) of the continuous metal bands (34) each have a circumferentially extending locking bead (38) engaging the next radially outer continuous metal band (34), for preventing lateral migration therebetween.

2. A metal drive V-belt according to claim 1, characterised in that the circular section (32) is tangential to the joined sides (26,28), and circumferentially extending locking beads (38) as aforesaid are disposed on each (34a,34b,34c) of the bands (34) having the said chamfered surface (36), for maintaining lateral alignment of adjacent bands (34).

3. A metal drive V-belt according to claim 1 or 2, characterised in that each three-sided slot (22) has a radially inner corner forming the

said circular section (32), with the radially innermost (34a) of the continuous metal bands (34) having its chamfered surface (36) adjacent the respective radially inner corner.

0193288

PRIOR ART

Fig.1

Fig.2

Fig.3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | EP-A-0 014 013 (VAN DOORNE) | | F 16 G 5/16 |
| A | DE-A-2 414 989 (HEYNAU) | | |
| A | FR-A-2 527 723 (MICHELIN) | | |
| A | EP-A-0 026 534 (VAN DOORNE) | | |
| A | DE-A-3 039 337 (FIAT) | | |
| A | PATENTS ABSTRACTS OF JAPAN, vol. 7, no. 110 (M-214) [1255], 13th May 1983; & JP - A - 58 30 549 (TOYOTA JIDOSHA KOGYO K.K.) 23-02-1983 | | TECHNICAL FIELDS SEARCHED (Int Cl 4) <br><br> F 16 G |
| A | DE-A-2 643 528 (VAN DOORNE) <br><br> & GB - A - 1 558 809 (Cat. D) | | |
| D,P A | EP-A-0 165 677 (GENERAL MOTORS) | | |
| D,P A | EP-A-0 165 678 (GENERAL MOTORS) | | |

The present search report has been drawn up for all claims

| Place of search | Date of completion of the search | Examiner |
|---|---|---|
| THE HAGUE | 03-06-1986 | BARON C. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82